(19) **Europäisches Patentamt**

**European Patent Office**

**Office européen des brevets**

(11) **EP 0 958 645 B1**

(12) **EUROPÄISCHE PATENTSCHRIFT**

(45) Veröffentlichungstag und Bekanntmachung des Hinweises auf die Patenterteilung:
**17.10.2001 Patentblatt 2001/42**

(51) Int Cl.⁷: **H02J 1/10**

(21) Anmeldenummer: **98909289.5**

(22) Anmeldetag: **27.01.1998**

(86) Internationale Anmeldenummer:
**PCT/DE98/00240**

(87) Internationale Veröffentlichungsnummer:
**WO 98/35420 (13.08.1998 Gazette 1998/32)**

(54) **LASTSYMMETRIERUNG MEHRERER UNABHÄNGIG ARBEITENDER MODULE EINER STROMVERSORGUNGSANLAGE**

LOAD BALANCING OF SEVERAL INDEPENDENTLY WORKING MODULES OF A POWER SUPPLY INSTALLATION

EQUILIBRAGE DE CHARGE DE PLUSIEURS MODULES FONCTIONNANT INDEPENDAMMENT DANS UNE INSTALLATION D'ALIMENTATION EN COURANT

(84) Benannte Vertragsstaaten:
**DE FR GB SE**

(30) Priorität: **07.02.1997 DE 19704662**

(43) Veröffentlichungstag der Anmeldung:
**24.11.1999 Patentblatt 1999/47**

(73) Patentinhaber: **SIEMENS AKTIENGESELLSCHAFT**
**80333 München (DE)**

(72) Erfinder:
  • **RETZ, Guido**
    **D-64859 Eppertshausen (DE)**
  • **RINNE, Karl-Heinz**
    **D-93333 Neustadt (DE)**

(56) Entgegenhaltungen:
**US-A- 5 157 269**

• **JORDAN M: "UC3907 Load Share IC Simplifies Parallel Power Supply Design" UNITRODE APPLICATION NOTE U-129, UNITRODE CORP, MERRIMACK, NH, AVAILABLE FROM INTERNET: <URL: "HTTP://WWW.UNITRODE.COM /APPS/U129.PDF"> 15 JUNE 1998, XP002068391 in der Anmeldung erwähnt**
• **RAJAGOPALAN J ET AL: "MODELING AND DYNAMIC ANALYSIS OF PARALLELED DC/DC CONVERTERS WITH MASTER-SLAVE CURRENT SHARING CONTROL" APEC '96. ELEVENTH ANNUAL APPLIED POWER ELECTRONICS CONFERENCE AND EXPOSITION, SAN JOSE, MAR. 3 - 7, 1996, Bd. VOL. 2, Nr. CONF. 11, 3.März 1996, INSTITUTE OF ELECTRICAL AND ELECTRONICS ENGINEERS, Seiten 678-684, XP000585913**
• **JOVANOVIC M M ET AL: "A NOVEL, LOW-COST IMPLEMENTATION OF ''DEMOCRATIC'' LOAD-CURRENT SHARING OF PARALLELED CONVERTER MODULES" PROCEEDINGS OF THE INTERNATIONAL TELECOMMUNICATIONS CONFERENCE (INTELEC), VANCOUVER, OCT. 30 - NOV. 3, 1994, Nr. CONF. 16, 30.Oktober 1994, INSTITUTE OF ELECTRICAL AND ELECTRONICS ENGINEERS, Seiten 420-427, XP000623362**

**Beschreibung**

Die Erfindung bezieht sich auf ein Verfahren zur Lastsymmetrierung mehrerer autark und unabhängig arbeitenden Stromversorgungsmodulen einer modularen Stromversorgungsanlage.

Für eine Reihe von Anwendungen bietet der modulare Aufbau von Stromversorgungen und Stromversorgungsanlagen deutliche Vorteile. Die Modularität ermöglicht die variable Konfiguration einer aus einheitlichen Komponenten bestehenden Stromversorgungsanlagen. Vorteilhaft erweist sich in diesem Zusammenhang auch die spätere Erweiterbarkeit. Ein weiteres wichtiges Argument für den modularen Aufbau begründet sich in der Möglichkeit, die Zuverlässigkeit von Stromversorgungsanlagen durch eine redundante Auslegung zu steigern. Neben einigen Anwendungen in der Informationstechnik bestehen vor allem in der Telekommunikationstechnik hohe Anforderung an die Verfügbarkeit und Zuverlässigkeit von Stromversorgungssystemen.

Um durch eine redundante Auslegung einer modularen Stromversorgungsanlage ein Maximum an Zuverlässigkeit zu erreichen, muß die Gesamtausgangsleistung möglichst gleichmäßig auf die beteiligten Module verteilt werden. Die Wurzel dieser Forderung liegt im exponentiellen Zusammenhang zwischen der Komponenten-Ausfallwahrscheinlichkeit und der Temperatur begründet. Unter Annahme einer gleichmäßigen Kühlung ist die Temperatur der einzelnen Stromversorgungsmodule von deren Belastung abhängig.

Die angestrebte Symmetrierung der Belastung der einzelnen parallel geschalteten Stromversorgungsmodule kann auf verschiedenen Wegen erreicht werden. Bei Stromversorgungen mit Konstantspannungs-Ausgang ist eine Beschränkung der Lastausgleichsfunktion auf die Symmetrierung der Ausgangsströme der parallel geschalteten Module gebräuchlich. Aufgrund der in der Regel dominierenden Stromabhängigkeit der Verluste liefert diese Einschränkung gute Resultate hinsichtlich der gleichmäßigen Verteilung der thermischen Belastung.

Es ist bekannt, daß mit einem Minimum an Verdrahtungs- und Schaltungsaufwand sich ein Stromausgleich zwischen parallel geschalteten Stromversorgungsmodulen durch passiven Stromausgleich erzielen läßt. Der passive Stromausgleich stellt sich ein, wenn alle parallel geschalteten Stromversorgungsmodule einen definierten, positiven Innenwiderstand aufweisen. Die Qualität des Stromausgleichs hängt vom Gleichlauf der Quellenspannung und der Größe des Innenwiderstands der parallel geschalteten Stromversorgungsmodule ab. Unter Annahme eines definierten Toleranzbandes für die einzelnen Quellenspannungen wird die Abweichung der Ausgangsströme vom arithmetischen Mittelwert um so geringer, je größer die Innenwiderstände sind.

Einer beliebigen Vergrößerung des Innenwiderstandes sind allerdings durch die verschlechterte Stabilität der Ausgangsspannung bei Lastschwankungen enge Grenzen gesetzt. In der Praxis erweist sich auch die erforderliche enge Toleranz der Quellenspannung, sowie die hohe Langzeit- und Temperaturstabilität als problematisch. Diese erwähnten Probleme bedingen, daß das einfache Verfahren des passiven Stromausgleichs in einem nur sehr begrenzten Umfang praktisch eingesetzt werden kann.

Aus dem Applikationsbericht der Firma Unitrode Integrated Circuits, insbesondere dem Kapitel "UC3907 Load Share IC Simplifies Parallel Power Supply Design", Seiten 10-237 bis 10-346, ist ein weiteres analoges Verfahren zur Lastsymmetrierung bekannt. Ein besonderes Stromversorgungsmodul ist als Master ausgelegt. Das Master-Modul enthält eine Spannungsreferenz und einen Regelverstärker für die Ausgangsspannung. Die Stellgröße dieses Regelverstärkers wird über eine gesonderte Leitung an alle Slave-Module geführt. Die Slave-Module enthalten einen Stromregler und speisen einen Strom in den gemeinsamen Summenknoten ein, der der vom Master gelieferten Stellgröße proportional ist. Sie verhalten sich wie vom Master gesteuerte Stromquellen. Durch die individuellen Stromregler werden die Ausgangsströme der parallelen Stromversorgungsmodule gleich.

Ein wesentlicher Nachteil dieses Verfahrens ist die fehlende Redundanz bei einem Ausfall des Master-Moduls. Die gesamte Stromversorgungsanlage kann durch einen Einzelfehler im Master-Modul versagen. Ein weiterer Nachteil ergibt sich durch die Notwendigkeit, mit der Stellgröße des Spannungsreglers ein Signal relativer hoher Bandbreite über lange Wege in der Stromversorgungsanlage verbinden zu müssen. Einer effektiven Filterung des Signals steht die gewünschte hohe Bandbreite entgegen.

Ein weiteres analoges Stromausgleichsverfahren ist aus dem eingangsgenannten Applikationsbericht bekannt. Dieses Stromausgleichsverfahren benutzt den an einem gemeinsamen CSR-(Current Sharing-) Knoten gebildeten Mittelwert der Ausgangsströme. Bei diesem Verfahren mißt jedes Stromversorgungsmodul den eigenen Ausgangsstrom und legt eine stromproportionale Spannung über einen Widerstand auf diesen gemeinsamen CSR-Knoten. Die Spannung am CSR-Knoten spiegelt dadurch den Mittelwert des Ausgangsstromes aller Stromversorgungsmodule wieder. Die Ausgangsströme aller Stromversorgungsmodule sind gleich, wenn über sämtliche Widerstände am CSR-Knoten keine Ströme mehr fließen. Diese Ausgleichsfunktion wird von Regelkreisen übernommen, die die Spannungssollwerte jedes Stromversorgungsmoduls so verändern, daß die Spannungen an den Widerständen am CSR-Knoten zu Null werden. Mit diesem Verfahren läßt sich ein Stromausgleich hoher Genauigkeit bei gleichzeitig unkritischer Auslegung der einzelnen kaskadierten Regelkreisen realisieren. Vorteilhaft wirkt sich aus, daß die Bandbreite des Signals am CSR-Knoten im Hinblick auf die dominierenden großen thermischen Zeitkonstanten sehr gering gewählt werden kann.

Nachteilig wirkt sich aus, daß ein gewisser Aufwand allerdings erforderlich ist, um eine Verfälschung des Signals am CSR-Knoten durch Defekte oder abgeschalteter Stromversorgungsmodule zu vermeiden. In der Regel ist ein von einer Überwachungslogik gesteuertes Relais erforderlich, um die Strombidirektionale CSR-Leitung abtrennen zu können. Als weiteres Problem ergibt sich eine mögliche Verfälschung des Stromausgleichs durch Verschiebung des Bezugspotentials in örtlich ausgedehnten Stromversorgungsanlagen. Dieses Problem stellt sich generell, wenn empfindliche analoge Signale zu Steuerungszwecke benutzt werden.

Es gibt zwei wesentliche Gründe, die für den zunehmenden Einsatz digitaler Lastsymmetrierungsverfahren in Stromversorgungsanlagen verantwortlich sind.

Einerseits verspricht der Ersatz sämtlicher analoger durch digitale Steuersignale eine Vielzahl von Vorteilen. In diesem Zusammenhang sind Lichtwellenleiter besonders interessant. Die optische Übertragung sichert eine exzellente Störfestigkeit und Robustheit gegen ESD-(Electrostatic Discharge-) Impulse. Die galvanische Trennung limitiert das Problem der belastungsabhängigen Verschiebung des Bezugspotential zwischen den Steuerschnittstellen und der Stromversorgungsmodule und bietet inhärenten Schutz gegen Kurzschlüsse.

Ein weiterer wichtiger Grund für das Interesse an digitaler Lastsymmetrierungsverfahren liegt im zunehmenden Einsatz von Mikroprozessoren für Steuerungszwecke in Stromversorgungen begründet. Bei derartigen mikroprozessorgesteuerten Regelungen ist eine digitale Sollwerterzeugung für die Ausgangsspannung vorhanden. Werden nun analoge Stromausgleichsverfahren benutzt, so steigt der Aufwand bei der Überwachung und der Signalverarbeitung. Dieser zusätzliche Aufwand kann durch eine mikroprozessorgerechte, rein digitale Übertragung des Stromausgleichssignals vermieden werden. Auch können digitale Steuereingänge deutlich preiswerter, ESD-sicher und können EMV-gerecht und kurzschlußfest gestaltet werden.

Zur digitalen Übertragung der Lastausgleichsinformation erscheinen zwei Konzepte praktikabel. Eine mögliche Lösung bietet die Übertragung von Signalen mit Hilfe einer synchronen oder asynchronen seriellen Schnittstelle an. Dieses Konzept ist zwar sehr flexibel, erfordert aber knappe Ressourcen eines Mikroprozessors.

Weniger komplex ist die Übertragung eines pulsweitenmodelierten Signals. Vorteilhaft an diesem Konzept ist die einfache, resourcenschonende Generierung und Auswertung des Signals durch einen Mikroprozessor.

Neben der Art der Signalübertragung kommt der Topologie der Busverbindung für die Lastsymmetrierung eine wichtige Rolle zu. Bei analogen Lastausgleichsverfahren läßt sich die Symmetrie und Gleichberechtigung aller am Strombus angeschlossenen Stromversorgungsmodule relativ einfach erreichen. Diese Möglichkeit ist bei digitalen Stromausgleichsverfahren nicht mehr gegeben. Statt dessen ist es notwendig, daß ein Master die Lastsymmetrierung steuert.

Aus der Entgegenhaltung Prospekt "RTCSU Control Supervisory Unit" der Firma RECTIFIER TECHNOLOGIES PACIFIC PTY LTD" ist ein digitaler Stromausgleich mit fester Steuereinheit bekannt. Bei diesen digitalen Stromausgleichsverfahren fragt die Steuereinheit (Master) über einen digitalen Kanal in regelmäßigen Abständen die Ist-Werte der Ausgangsströme sämtlicher Stromversorgungseinheiten ab. Der Mittelwert wird berechnet und als neuer Sollwert der Ausgangsströme an alle angeschlossenen Stromversorgungsmodule (Slave) zurückgeschickt. Durch die erforderliche Steuereinheit ist das Verfahren relativ kostspielig. Nachteilig ist auch, daß bei einem Versagen der Steuereinheit die Stromversorgungsanlage in den passiven Lastausgleich zurückfällt.

Im Aufsatz "Für jede Anwendung das richtige Bussystem", von Matthias Eschle, abgedruckt in der DE-Zeitschrift "etz", Heft 21, 1969, Seiten 18 bis 22, werden verschiedene Feldbussysteme vorgestellt. Diese Feldbussysteme unterscheiden sich vor allem im Aufbau der Protokolle und der Art der Datenübertragung (Topologie). Eines dieser Feldbussysteme ist der CAN-(Controller Area Network) Bus. Dieser CAN-Bus arbeitet objektorientiert und kann deshalb auch als Multi-Master-Struktur realisiert werden. Die Vorteile einer solchen Kommunikation mit einem Multi-Master-System sind, daß einzelne Anlagenteile autark und unabhängig arbeitend gestaltet werden können und nur Daten zum austauschen kommen, die von allen Teilnehmern benötigt werden. Bei einem Multi-Master-System können mehrere Teilnehmer den Bus gleichzeitig anfordern. Auch das Adressieren der Teilnehmer findet nicht im herkömmlichen Sinne statt, sondern es werden priorisierende Nachrichten versendet. Versuchen nun gleichzeitig mehrere CAN-Teilnehmer, auch Knoten genannt, den Bus zu benutzen, so erhält derjenige Sender die Sendeberichtigung, dessen Nachricht die höchste Priorität aufweist. Dies geschieht auf physikalischer Ebene mit der sogenannten zerstörungsfreien bitweisen Arbitrierung. Die höchste Priorität hat hierbei die niedrigste Bitzahl. Dieses Bus-Zugriffsverfahren nennt sich CSMA/CA-Verfahren (Carrier Sense Multiple Access with Collision Avoidance). Dieses Verfahren verleiht dem CAN-System seine Multimasterfähigkeit und es lassen sich unabhängig voneinander laufende Steuerungsprozesse realisieren, die bei Bedarf Daten untereinander austauschen können.

Ein weiteres Feldbussystem ist der Interbus-S, der nach dem Master-Slave-Zugriffsverfahren arbeitet. Der Busmaster ist die Schnittstelle zum überlagerten Steuerungssystem. Topologisch ist die Struktur des Interbus-S als Ring realisiert, wobei alle Teilnehmer aktiv an der Datenübertragung beteiligt sind. Das Ringsystem bietet einen in sich geschossenen Übertragungsweg. Die Daten werden von Teilnehmer zu Teilnehmer weitergesendet. Beim Interbus-S entfällt die Notwendigkeit, die einzelnen Teilnehmer zu adressieren, da jede Busstation eindeutig aufgrund ihrer physikalischen Position im Ring zu identifizieren ist. Nachteilig wirkt sich bei dieser Struktur der Ausfall eines Teilnehmers aus, da dann das gesamte Ringsystem unterbrochen ist.

Diese genannten Feldbussysteme arbeiten weitgehend mit aufwendigen und komplizierten Protokollen und kommen selten nicht ohne umfangreiche Hardware-Unterstützung aus.

Der Erfindung liegt die Aufgabe zugrunde, ein einfaches Verfahren zur Lastsymmetrierung in einer modularen Stromversorgungsanlage mit digitaler Übertragung einer Lastausgleichsinformation anzugeben, ohne daß eine feste Steuereinheit benötigt wird.

Diese Aufgabe wird erfindungsgemäß mit dem Merkmal des Anspruchs 1 gelöst.

Das erfindungsgemäße Verfahren zur Lastsymmetrierung mehrerer autark und unabhängig arbeitenden Stromversorgungsmodulen einer modularen Stromversorgungsanlage zeichnet sich dadurch aus, daß das Master-Stromversorgungsmodul für die Steuerung des knotenpunktförmigen Busses nicht festgelegt ist. Durch dieses Verfahren konkurrieren gleichberechtigte Stromversorgungsmodule um die Rolle des Masters. Das Ergebnis ist, daß genau ein Stromversorgungsmodul den Status Master gewinnt, während die restlichen Module im Status Slave verbleiben. Sobald die Statusverteilung abgeschlossen ist, generiert das Master-Stromversorgungsmodul ein Lastinformations-Signal und sendet dieses an die Slave-Stromversorgungsmodule. Für dieses Slave-Versorgungsmodule ist das empfangene Lastinformations-Signal jeweils ein Sollwert für eine Lastsymmetrierungs-Regelung, die in Abhängigkeit der ermittelten Lastunsymmetrie den Sollwert jeweils seiner Ausgangsspannung so verändert, daß die ermittelte Lastunsymmetrie ausgeregelt werden kann.

Bei einem vorteilhaften Verfahren nimmt jedes Master-Stromversorgungsmodul die Ausgabe des dominanten Zustands an den Bus nach einer belastungsabhängigen Zeitdauer zurück und überprüft nach der Rücknahme, ob der Bus in den rezessiven Zustand übergeht. Verbleibt der Bus im dominanten Zustand, so weist sich das erkennende Master-Stromversorgungsmodul den Status Slave zu und beendet den Arbitrierungsvorgang. Auf diese Weise werden Konflikte beim Zugriff auf den Bus gelöst, wenn mehrere Stromversorgungsmodule für längere Zeit synchron und dadurch unbemerkt voneinander den Status Master innehaben. In diesem Fall erhält das Stromversorgungsmodul der modularen Stromversorgungsanlage mit der höchsten Belastung den Status Master.

Bei einem weiteren vorteilhaften Verfahren gibt das Master-Stromversorgungsmodul seinen Master-Status nach einer vorgestimmten Zeitdauer ab und greift für eine vorbestimmte Zeit nicht mehr auf den Bus zu. Dadurch geht der Bus in den rezessiven Zustand über und verharrt in diesem Zustand für die vorbestimmte Zeit. Nachdem diese Zeitspanne abgelaufen ist, erkennen sämtliche Stromversorgungsmodule der modularen Stromversorgungsanlage den Beginn eines neuen Arbitrierungszyklus, an den sämtliche Stromversorgungsmodule teilnehmen und versuchen den Master-Status zu gewinnen. Dadurch bekommt jedes Stromversorgungsmodul die Möglichkeit, den Master-Status zu erringen.

Bei einem weiteren vorteilhaften Verfahren wird zu Beginn eines Arbitrierungszyklus jedem Stromversorgungsmodul eine Wartezeit zugeordnet, wodurch Zugriffsprioritäten festgelegt werden. Dabei werden einem fehlerfreien Slave-Stromversorgungsmodul die höchste Priorität, einem Slave-Stromversorgungsmodul, das an der Fehlerbedingung erkannt hat, eine mittlere Priorität und einen Master-Stromversorgungsmodul die niedrigste Priorität zugeordnet. Durch die Wartezeiten zu Beginn eines jeden Arbitrierungszyklusses kann in Abhängigkeit mit mehrerer dieser Zyklen ein fehlerhaftes Stromversorgungsmodul detektiert und von der Steuerung des Lastausgleiches ausgeschlossen werden.

Zur weiteren Erläuterung der Erfindung wird auf die Zeichnung Bezug genommen, in der die Vernetzung mehrerer Stromversorgungsmodule einer modularen Stromversorgungsanlage schematisch veranschaulicht ist.

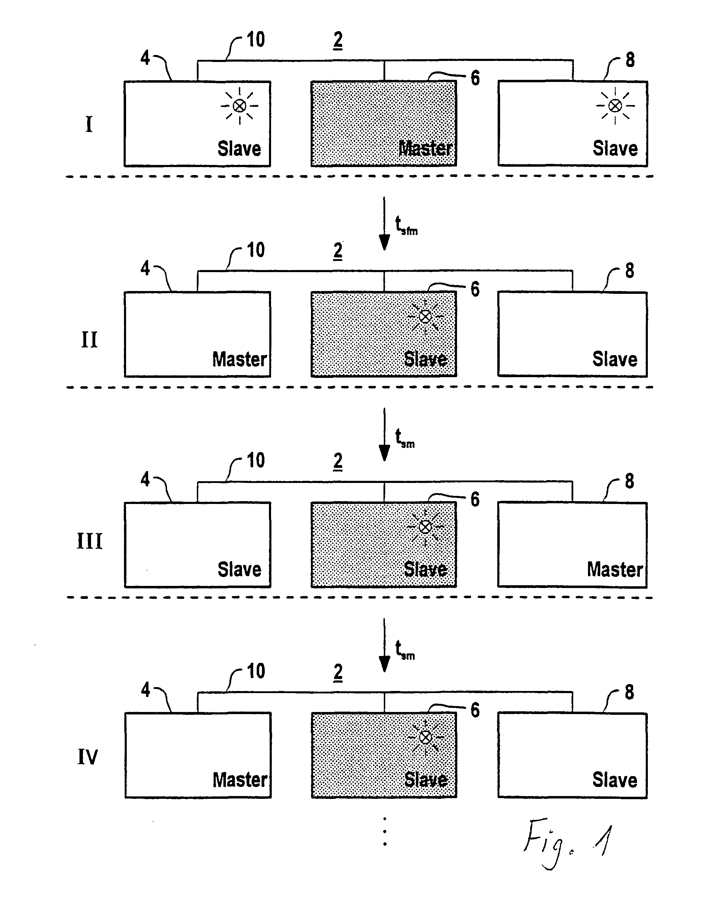

FIG 1 zeigt eine modulare Stromversorgungsanlage 2, die mehrere autark und unabhängig arbeitende Stromversorgungsmodule 4, 6 und 8 aufweist. Beim erfindungsgemäßen Verfahren ist die Anzahl der Stromversorgungsmodule 4, 6 und 8 nicht auf diese drei beschränkt. Diese drei Stromversorgungsmodule 4,6 und 8 sind mittels eines Busses 10 miteinander vernetzt, wobei dieser Bus eine knotenpunktförmige Topologie aufweist. Der Informationsfluß für den Lastausgleich erfolgt über diesen Bus 10. Diese Stromversorgungsmodule 4, 6 und 8 sind identisch aufgebaut und sind mit der erforderlichen Bus-Hardware ausgestattet, um sowohl schreibend als auch lesend auf den Bus 10 zugreifen zu können. Durch das noch zur erläuternde erfindungsgemäße Verfahren zur Lastsymmetrierung erhält ein Stromversorgungsmodul 4, 6 und 8 den Status Master zugeteilt. Dieses Stromversorgungsmodul mit dem Status Master, beispielsweise das Stromversorgungsmodul 6, steuert den Bus 10, während die restlichen Module, beispielsweise die Stromversorgungsmodule 4 und 8, im Status Slave verbleiben. Die Slave-Versorgungsmodule 4 und 8 lesen das vom Master-Stromversorgungsmodul 6 generierte Lastinformations-Signal.

Physikalisch kann der Bus 10 auf verschiedene Arten realisiert sein. Denkbar ist an dieser Stelle beispielsweise ein Bussystem, das leitungsgebunden oder mit Lichtwellenleiter aufgebaut ist. Wesentlich für den Arbitrierungsmechanismus ist, daß der Bus 10 zwei logische Zustände annehmen kann, von denen einer dominant und der andere rezessiv ist. Der Zustand des Busses 10 ist dominant, wenn mindestens eines der Stromversorgungsmodule 4, 6 oder 8 den dominanten Zustand aktiviert. Der Zustand des Busses 10 ist rezessiv, wenn kein Stromversorgungsmodul 4, 6 oder 8 den dominanten Zustand ausgibt. Hinsichtlich des dominanten Zustandes ist dadurch eine wired-or-Verknüpfung realisiert.

Eine mögliche drahtgebundene Realisierung des Busses 10 ist in Bild 3 des eingangs genannten Aufsatzes dargestellt. Der Zustand des Busses 10 wird dominant, wenn einer der dort dargestellten Schalter geschlossen ist. Wenn sämtliche Schalter geöffnet sind, zieht der Pull-up-Widerstand den Bus 10 in den rezessiven Zustand.

Die eigentliche Lastinformation wird vom Stromversorgungsmodul 6 mit dem Status Master pulsweitenmodelliert über den Bus 10 übertragen. Beispielsweise beträgt die Pulsfrequenz $f_p$ = 20 Hz, so daß die Pulsperiodendauer $T_m$ = 50 ms ist. Das Tastverhältnis d ist dann definiert als Quotient aus Zeitdauer $T_d$ des dominanten Zustandes und der Periodendauer $T_m$ der Pulsweitenmodulation. Das Stromversorgungsmodul 6 mit dem Status Master kodiert seine relative Ausgangslast (Quotient aus Ist- und Maximalwert der Belastung) mit einem Tastverhältnis d, wobei zwischen diesen ein linearer Zusammenhang besteht. Die Stromversorgungsmodule 4 und 8 werten das gesendete pulsweitenmodellierte Signal aus. In diesem Slave-Stromversorgungsmodulen 4 und 8 ist jeweils ein Regelkreis wirksam, der aufgrund einer festgestellten Lastunsymmetrie den Sollwert für die jeweilige Ausgangsspannung so verändert, daß diese Lastunsymmetrie ausgeregelt wird.

Im Hinblick auf die universelle Kombinierbarkeit von Stromversorgungsmodulen ist die Normierung der ausgetauschten Lastinformation sinnvoll. Stromversorgungsmodule unterschiedlicher Ausgangsleistung können dadurch auf einen gemeinsamen Ausgang arbeiten.

Aus Sicherheitsgründen ist der Aussteuerbereich, in dem die Ausgangsspannung vom Stromausgleichsregler variiert werden kann, beschränkt. Ein Fehlerzustand wird erkannt, sofern ein defektes Slave-Stromversorgungsmodul 4 bzw. 8 dem Stromsollwert des Master-Stromversorgungsmoduls 6 nicht folgen kann. Eine weitere Möglichkeit Fehler zu erkennen ist durch eine Beschränkung des Tastgrades d gegeben. Der Tastgrad d variiert zwischen $d_{min}$ und $d_{max}$, beispielsweise $d_{min}$ = 5 % und $d_{max}$ = 95 %. Ein andauernd dominanter Zustand wird als Fehler bewertet, während ein andauernd rezessiver Zustand zum Neustart der Arbitrierung führt.

Das erfindungsgemäße Verfahren zur Lastsymmetrierung mehrerer autark und unabhängig arbeitenden Stromversorgungsmodule 4, 6, und 8 einer modularen Stromversorgungsanlage 2 kann in drei Phasen unterteilt werden. Die erste Phase dieses Verfahrens ist die Startphase, in der jedes Stromversorgungsmodul 4, 6 und 8 den Zustand des Busses 10 überprüft. Ist der Zustand dieses Busses 10 für eine vorbestimmte Zeitdauer, beispielsweise eine Pulsperiodendauer $T_m$, rezessiv, d.h. während dieser Zeitspanne hat kein Stromversorgungsmodul 4, 6 oder 8 auf diesem Bus 10 Zugriff, so wird die zweite Phase des erfindungsgemäßen Verfahrens gestartet. Andernfalls verbleiben die Stromversorgungsmodule 4, 6 oder 8 in ihrem Ausgangszustand und damit im Status Slave. Die zweite Phase kann mit Arbitrierungsphase (Anforderungsphase) bezeichnet werden.

Zu Beginn dieser Arbitrierungsphase überprüft dieses Stromversorgungsmodul 4,6 und 8, in welchem Zustand sich der Bus 10 befindet. Sofern sich der Bus 10 zum Abfragezeitpunkt im dominanten Zustand befindet, weist sich das entsprechende Stromversorgungsmodul 4, 6 oder 8 den Status Slave zu. Bei der in der Figur dargestellten modularen Stromversorgungsanlage 2 sind dies die Stromversorgungsmodule 4 und 8. Ist der Zustand des Busses 10 rezessiv, weist sich das entsprechende Stromversorgungsmodul 4, 6 oder 8 den Status Master zu. Beim dargestellten Beispiel weist sich das Stromversorgungsmodul 6 den Status Master zu. Außerdem versetzt dieses Master-Stromversorgungsmodul den Bus 10 in den dominanten Zustand. Sobald sich ein Stromversorgungsmodul 4, 6 oder 8 den Status Master zugewiesen hat, beginnt die Steuerphase des erfindungsgemäßen Verfahrens.

Durch den unsynchronisierten Verlauf der Start- und Arbitrierungsphase jedes Stromversorgungsmoduls, kann es vorkommen, daß wenigstens zwei von mehreren Stromversorgungsmodulen 4, 6 und 8 zeitgleich den Bus 10 in den dominanten Zustand versetzen. Das heißt, zwei Stromversorgungsmodule der modularen Stromversorgungsanlage haben sich den Status Master zugewiesen. Um diesen Zugriffs-Konflikt zu lösen, wird eine weitere Prüfung von den Master-Stromversorgungsmodulen vorgenommen.

Diese weitere Prüfung ist ein Bestand der Steuerphase. Zu Beginn der Steuerphase ist der Bus 10 von den Master-Stromversorgungsmodulen in den dominanten Zustand versetzt worden. Entsprechend seiner relativen Ausgangslast wird der Tastgrad d kodiert. Dadurch ist die Zeitdauer $T_d$ für den dominanten Zustand bestimmt. Nachdem jeweils die Zeitdauer $T_d$ abgelaufen ist, gibt jedes Master-Stromversorgungsmodul den Bus 10 wieder frei. Nach dieser Freigabe überprüft jedes Master-Stromversorgungsmodul, ob der Bus 10 wieder in den rezessiven Zustand übergeht. Sofern der Bus 10 zum Zeitpunkt der Freigabe im dominanten Zustand verbleibt, liegt eine Kollision vor, d.h., mehr als ein Stromversorgungsmodul haben den Bus 10 gleichzeitig angefordert. Da die Zeitdauer $T_d$ belastungsabhängig ist, wird dasjenige Master-Stromversorgungsmodul mit der höchsten Belastung als letzter den Bus 10 wieder freigeben. Alle anderen Master-Stromversorgungsmodule stellen fest, aufgrund ihrer Freigabe, ist der Bus 10 nicht in den rezessiven Zustand übergegangen. Deshalb weisen sich diese Master-Stromversorgungsmodule nun den Status Slave zu.

Während der Steuerphase des erfindungsgemäßen Verfahrens sendet das Master-Stromversorgungsmodul 6 ein Lastausgleichs-Signal, das von den Slave-Stromversorgungsmodulen 4 und 8 ausgewertet wird. Das heißt, jedes Slave-Stromversorgungsmodul 4 bzw. 8 vergleicht sein Last-Istwert mit dem vom Master-Stromversorgungsmodul 6 gesendeten Last-Sollwert. Existiert eine Differenz, liegt eine Lastunsymmetrie vor, die durch Nachregeln des Sollwertes der Ausgangsspannung dieses Slave-Stromversorgungsmoduls 4 bzw. 8 ausgeregelt wird.

In einer typischen, mit analogem Lastausgleich arbeitenden Stromversorgungsanlage führen unerkannte Störungen eines einzelnen Stromversorgungsmoduls häufig auch zu Störungen der Lastausgleichsfunktion. Das erfindungsgemäße Verfahren ermöglicht optional die Erkennung und Abschaltung von Stromversorgungsmodulen, die die Symmetrie des Lastausgleiches stören.

Das hier erläuterte Verfahren nutzt aus, daß die Topologie des Busses 10 für den Lastausgleich zwar symmetrisch ist, im Gegensatz zu analogen Verfahren aber ein Stromversorgungsmodul existiert, das den Lastausgleich durch den zugeteilten Status Master steuert.

Aus der Sicht der Slave-Stromversorgungsmodule 4 und 8 ist eine einfache Fehlererkennung möglich. Nachdem Einschwingprozesse abgeklungen sind, genügt ein Vergleich des vom Master-Stromversorgungsmoduls 6 geforderten Last-Sollwertes mit dem entsprechenden Istwert um Fehlerzustände zu erkennen. Eine vom Slave-Modul festgestellte Abweichung kann mehrere Ursachen haben. Im einfachsten Fall liegt ein Defekt in dem Slave-Stromversorgungsmodul 4 bzw. 8 vor, das den Fehlerzustand erkennt. Komplizierter werden die Zusammenhänge, wenn ein Fehler im steuernden Master-Stromversorgungsmodul 6 aufgetreten ist und dadurch fehlerhafte Sollwerte an alle Slave-Stromversorgungsmodule 4 und 8 gesendet werden. Denkbar ist beispielsweise, daß ein Defekt in der Sollwertvorgabe des Master-Stromversorgungsmoduls 6 vorliegt und dadurch dessen Ausgangslast einen oberen Grenzwert annimmt oder zu Null wird. Solche Fehlerzustände kann das Master-Stromversorgungsmodul 6 nicht selbständig erkennen, weil ihm die Belastung der Slave-Stromversorgungsmodule 4 und 8 unbekannt ist.

Mit Hilfe einer erweiterten Arbitrierungsphase kann eine durch das Master-Stromversorgungsmodul 6 bedingte Störung des Lastausgleiches verhindert werden. Das Kernstück der erweiterten Arbitrierungsphase ist die periodische Re-Arbitrierung des Busses 10. Nach Ablauf einer vorbestimmten Zeitspanne $T_{rearb}$ gibt das Master-Stromversorgungsmodul 6 seinen Master-Status selbständig ab, und greift für eine vorbestimmte Zeit nicht mehr auf den Bus 10 zu. Dadurch geht der Bus 10 in den rezessiven Zustand über. Die vorbestimmte Zeitdauer $T_{rearb}$, die auch mit Re-Arbitrierungszeit bezeichnet wird, wird typisch im Bereich weniger Sekunden bis zu einigen Minuten liegen.

Zur Erklärung der erweiterten Arbitrierungsphase sind in der Figur mehrere Re-Arbitrierungszyklen dargestellt, die fortlaufend mit den römischen Zahlen I bis IV gekennzeichnet sind. In dieser Darstellung sind zum besseren Verständnis noch weitere Symbole eingebracht. Das Symbol ☀ kennzeichnet ein Stromversorgungsmodul 4 bzw. 6 bzw. 8 das einen Fehler erkannt hat. Die graue Unterlegung eines Blockes kennzeichnet die fehlerhafte Funktionsweise eines Stromversorgungsmoduls 4 bzw. 6 bzw. 8.

Im Arbitrierungszyklus I sind dem Stromversorgungsmodul 6 der Status Master und den Stromversorgungsmodulen 4 und 8 jeweils der Status Slave zugewiesen. Außerdem ist gemäß der weiteren Symbole zu erkennen, daß beim Master-Stromversorgungsmodul 6 ein unerkannter Fehler auftritt und die beiden intakten Slave-Stromversorgungsmodule 4 und 8 einen Fehlerzustand erkennen, da sie dem vom Master-Stromversorgungsmodul 6 vorgegebenen Sollwert nicht folgen können. Nach Ablauf der Zeitdauer $T_{rearb}$ nimmt das Master-Stromversorgungsmodul 6 den dominanten Zustand des Busses zurück. Nachdem für eine vorbestimmte Zeitdauer, beispielsweise die Pulsperiodendauer $T_m$, der Bus 10 im rezessiven Zustand verharrt ist, erkennen sämtliche Stromversorgungsmodule 4, 6 und 8 den Beginn eines neuen Arbitrierungszyklus II. Jedes Stromversorgungsmodul 4, 6 und 8 versucht den Master-Status zu gewinnen. Durch die Erkennung von Fehlern ist nun jedem Stromversorgungsmodul 4, 6 und 8 eine Wartezeit vorangestellt, deren Dauer vom jeweiligen Zustand der Module 4, 6 und 8 abhängt. Für die Re-Arbitrierungsphase sind drei unterschiedliche Wartezeiten $t_{sm}$, $t_{sfm}$ und $t_{mm}$ vorgesehen. Die Prioritäten für den Re-Arbitrierungsprozeß werden durch die Länge der Wartezeit in absteigender Reihenfolge mit der Bedingung

$$t_{sm} < t_{sfm} < t_{mm}$$

festgelegt.

Auf der Grundlage des Zustandes des Zyklus I und aufgrund der Bedingung $t_{sfm} < t_{mm}$, beginnen die beiden Stromversorgungsmodule 4 und 8 eine konkurrierende Arbitrierung nach Ablauf der Wartezeit $t_{sfm}$. Diese Arbitrierung hat das Stromversorgungsmodul 4 gewonnen. Während der Steuerphase des erfindungsgemäßen Verfahrens erkennt das fehlerbehaftete Stromversorgungsmodul 6, das den Status Slave hat, einen Fehler. Dadurch wird für das defekte Stromversorgungsmodul 6 die Wartezeit $t_{sfm}$ wirksam. Durch Konkurrenz mit der kürzeren Wartezeit $t_{sm}$ für das intakte Slave-Stromversorgungsmodul 8 kann das defekte Stromversorgungsmodul 6 den Status Master nicht erneut gewinnen. Während des Zyklus III weist das Stromversorgungsmodul 4 den Status Slave und das Stromversorgungsmodul 8 den Status Master auf. Ab diesen Zyklus konkurrieren nur noch die beiden Stromversorgungsmodule 4 und 8 um den Status Master. Dadurch kann das defekte Stromversorgungsmodul 6 den Fehlerzustand stabil signalisieren und ist von der Steuerung des Lastausgleichs ausgeschlossen.

Der beschriebene Abkopplungsmechanismus arbeitet solange zuverlässig, wie mindestens zwei intakte Stromversorgungsmodule im System verfügbar sind. Ein im Stand-alone betriebenes Stromversorgungsmodul arbeitet durchgehend im Master Status. Eine Unterbrechung des Busses 10 führt zur Teilung der Stromversorgungsanlage 2 in zwei Teilblöcke, die über ein eigenes Mastermodul verfügen. Bei einer Fixierung des Pegels auf dem Bus 10 (beispielsweise durch einen Kurzschluß) versagt der Lastausgleich und die Stromversorgungsanlage 2 fällt in den passiven Stromausgleich zurück.

Das beschriebene Verfahren zur Lastsymmetrierung mehrerer Stromversorgungsmodule 4, 6 und 8 einer modularen Stromversorgungsanlage 2 hat folgende Vorteile:

- Über den Bus 10 werden nur zwei logische Zuständige übertragen (dominanter und rezessiver Zustand).

- Der Bus 10 kann vorteilhaft für Stromversorgungen eingesetzt werden, die von einem Mikroprozessor gesteuert werden. Die pulsweitenmodellierten Signale können von Standard-Mikroprozessoren ohne aufwendige Hardware ausgewertet und generiert werden.

- Durch die Übertragung digitaler Signale ist die digitale Lastausgleichsregelung wesentlich robuster gegen Störungen und etwaige Verschiebungen des Bezugspotentials als es bei analogen Verfahren der Fall ist.

- Mit Hilfe eines einfachen Verfahrens ist es möglich, defekte Stromversorgungsmodule von einer Beeinflussung des Lastausgleiches auszuschließen.

**Patentansprüche**

1. Verfahren zur Lastsymmetrierung mehrerer autark und unabhängig arbeitenden Stromversorgungsmodulen (4,6,8) einer modularen Stromversorgungsanlage (2), deren Stromversorgungsmodule (4,6,8) mittels einer knotenpunktförmigen Bustopologie miteinander vernetzt sind, mit folgenden Verfahrensschritten:

a) jedes Stromversorgungsmodul (4,6,8) überprüft derart den Bus (10), daß, wenn für eine vorbestimmte Zeit ($T_m$) der Bus (10) zugriffsfrei war, ein Arbitrierungsverfahren gestartet wird,
b) zu Beginn dieses Arbitrierungsverfahrens überprüft jedes Stromversorgungsmodul (4,6,8), ob der Bus (10) sich im rezessiven oder dominanten Zustand befindet,
c) befindet sich der Bus (10) im dominanten Zustand, so verbleibt dieses Stromversorgungsmodul (4,6,8) im Status Slave und beendet den Arbitrierungsvorgang,
d) befindet sich der Bus (10) im rezessiven Zustand, so weist sich dieses Stromversorgungsmodul (4,6,8) den Status Master zu, versetzt den Bus (10) in den dominanten Zustand und beendet den Arbitrierungsvorgang,
e) das Master-Stromversorgungsmodul (4,6,8) generiert ein Lastinformations-Signal und sendet dieses Signal ab und
f) jedes Slave-Stromversorgungsmodul (4,6,8) wertet dieses empfangene Signal derart aus, daß ein Sollwert seiner Ausgangsspannung so verändert wird, daß eine ermittelte Lastunsymmetrie ausgeregelt wird.

2. Verfahren nach Anspruch 1 mit weiteren Verfahrensschritten:

g) jedes Master-Stromversorgungsmodul (4,6,8) nimmt die Ausgabe des dominanten Zustands an den Bus (10) nach einer belastungsabhängigen Zeitdauer ($T_d$) zurück,
h) nach Rücknahme überprüft jedes Master-Stromversorgungsmodul (4,6,8), ob der Bus (10) in den rezessiven Zustand übergeht,
i) verbleibt der Bus (10) im dominanten Zustand, so weist sich das erkennende Master-Stromversorgungsmodul (4,6,8) den Status Slave zu und greift nicht weiter auf den Bus (10) zu.

3. Verfahren nach Anspruch 1, wobei das Master-Stromversorgungsmodul seinen Master Status nach einer vorbestimmten Zeitdauer ($T_{rearb}$) abgibt und für eine vorbestimmte Zeit nicht mehr auf den Bus (10) zugreift.

4. Verfahren nach Anspruch 1, wobei zu Beginn des Arbitrierungsverfahrens jedem Stromversorgungsmodul (4,6,8) eine Wartezeit ($t_{sm}$, $t_{stm}$, $t_{mm}$) zugeordnet wird, wodurch Zugriffsprioritäten festgelegt werden.

5. Verfahren nach Anspruch 4, wobei einem fehlerfreien Slave-Stromversorgungsmodul (4,8) die höchste Priorität einem Slave-Stromversorgungsmodul (6), der eine Fehlerbedingung hat, eine mittlere Priorität und einem Master-Stromversorgungsmodul (4,6,8) die niedrigste Priorität zugeordnet werden.

**6.** Verfahren nach Anspruch 2, wobei als belastungsabhängige Zeitdauer ($T_d$) das Produkt aus Tastverhältnis (d) und Zeitdauer ($T_m$) der Pulsperiode bestimmt wird.

**7.** Verfahren nach Anspruch 1, wobei die vorbestimmte Zeitdauer, in der der Bus zugriffsfrei sein soll, mindestens umgekehrt proportional zur Pulsfrequenz (fe) des pulsweitenmodulierten Lastinformations-Signals ist.

## Claims

**1.** Method for load balancing of several autonomously and independently working power supply modules (4, 6, 8) of a modular power supply installation (2), the power supply modules (4, 6, 8) of which are interconnected via a node-type bus topology, the method comprising the following steps:

a) Each power supply module (4, 6, 8) tests the bus (10) such that an arbitration procedure is started if the bus (10) has been free of access for a predetermined time ($T_m$),

b) at the beginning of this arbitration procedure, each power supply module (4, 6, 8) checks whether the bus (10) is in the recessive or in the dominant state,

c) if the bus (10) is in the dominant state, the particular power supply module (4, 6, 8) remains in slave status and terminates the arbitration process,

d) if the bus (10) is in the recessive state, the particular power supply module (4, 6, 8) allocates to itself master status, puts the bus (10) into the dominant state and terminates the arbitration process,

e) the master power supply module (4, 6, 8) generates a load information signal and transmits this signal, and

f) each slave power supply module (4, 6, 8) evaluates this received signal to the effect that the setpoint value of its output voltage is changed such that a detected load unbalance is corrected.

**2.** Method in accordance with Claim 1, comprising the further procedural steps:

g) Each master power supply module (4, 6, 8) cancels the allocation of the dominant state to the bus (10) after a load-dependent time period ($T_d$),

h) after the cancellation, each master power supply module (4, 6, 8) checks whether the bus (10) changes to the recessive state,

i) if the bus (10) remains in the dominant state, the detecting master power supply module (4, 6, 8) allocates slave status to itself and no longer accesses the bus (10).

**3.** Method in accordance with Claim 1, wherein the master power supply module surrenders its master status after a predetermined time period ($T_{rearb}$) and does not access the bus (10) again for a predetermined time period.

**4.** Method in accordance with Claim 1, wherein at the start of the arbitration procedure each power supply module (4, 6, 8) has a waiting time ($t_{sm}$, $t_{stm}$, $t_{mm}$) allocated to it by which the access priorities are determined.

**5.** Method in accordance with Claim 4, wherein a fault-free slave .power supply module (4, 8) is allocated the highest priority, a slave power supply module (6) which has a fault condition is allocated a medium priority, and a master power supply module (4, 6, 8) is allocated the lowest priority.

**6.** Method in accordance with Claim 2, wherein the load-dependent time period ($T_d$) is determined from the product of the pulse duty factor (d) and the duration ($T_m$) of the pulse period.

**7.** Method in accordance with Claim 1, wherein the predetermined time period in which the bus is required to be access-free, is at least inversely proportional to the pulse frequency (fe) of the pulse-width modulated load information signal.

## Revendications

**1.** Procédé pour l'équilibrage de charge de plusieurs modules d'alimentation en courant (4, 6, 8) fonctionnant de manière autonome et indépendante dans une installation d'alimentation en courant modulaire (2) dont les modules d'alimentation en courant (4, 6, 8) sont mis en réseau au moyen d'une topologie de bus en forme de noeuds, avec les étapes de procédé suivantes :

a) chaque module d'alimentation en courant (4, 6, 8) teste le bus (10) de telle sorte que, si le bus (10) était libre d'accès pendant un temps prédéterminé ($T_m$), un procédé d'arbitrage est déclenché,

b) au début de ce procédé d'arbitrage, chaque module d'alimentation en courant (4, 6, 8) teste si le bus (10) se trouve dans l'état récessif ou dans l'état dominant,

c) si le bus (10) se trouve dans l'état dominant, ce module d'alimentation en courant (4, 6, 8) reste à l'état d'esclave et termine l'opération d'arbitrage,

d) si le bus (10) se trouve dans l'état récessif, ce module d'alimentation en courant (4, 6, 8) s'attribue le statut de maître, place le bus (10) dans l'état dominant et termine l'opération d'arbitrage,

e) le module d'alimentation en courant maître (4, 6, 8) produit un signal d'information de charge et envoie ce signal et

f) chaque module d'alimentation en courant esclave (4, 6, 8) évalue ce signal reçu de telle sorte qu'il modifie une valeur de consigne de sa tension de sortie de telle sorte qu'un déséquilibre de charge déterminé est éliminé par régulation.

2. Procédé selon la revendication 1 avec d'autres étapes de procédé :

g) chaque module d'alimentation en courant maître (4, 6, 8) annule la sortie de l'état dominant sur le bus (10) après une durée ($T_d$) dépendante de la charge,

h) après l'annulation, chaque module d'alimentation en courant maître (4, 6, 8) teste si le bus (10) passe dans l'état récessif,

i) si le bus (10) reste dans l'état dominant, le module d'alimentation en courant maître (4, 6, 8) s'attribue l'état d'esclave et n'accède plus au bus (10).

3. Procédé selon la revendication 1, dans lequel le module d'alimentation en courant maître rend son statut de maître après une durée prédéterminée ($T_{rearb}$) et n'accède plus au bus (10) pendant un temps prédéterminé.

4. Procédé selon la revendication 1, dans lequel, au début du procédé d'arbitrage, on associe à chaque module d'alimentation en courant (4, 6, 8) un temps d'attente ($t_{sm}$, $t_{sfm}$, $t_{mm}$), ce qui fait que des priorités d'accès sont fixées.

5. Procédé selon la revendication 4, dans lequel on associe la plus grande priorité à un module d'alimentation en courant esclave (4, 8) sans erreur, une priorité moyenne à un module d'alimentation en courant esclave (6) pour lequel une condition d'erreur a été détectée et la plus petite priorité à un module d'alimentation en courant maître (4, 6, 8).

6. Procédé selon la revendication 2, dans lequel on détermine comme durée ($T_d$) dépendante de la charge le produit du rapport d'impulsions (d) et de la durée ($T_m$) de la période d'impulsion.

7. Procédé selon la revendication 1, dans lequel la durée prédéterminée pendant laquelle le bus doit être libre d'accès est au moins inversement proportionnelle à la fréquence d'impulsions (fe) du signal d'information de charge modulé en largeur d'impulsion.

Fig. 1